# EUROPEAN PATENT APPLICATION

(11) **EP 3 104 030 A1**
(43) Date of publication of application: **14.12.2016**
(21) Application number: 15746240.9
(22) Date of filing: 03.02.2015
(51) Int. Cl.: F16C 33/46, F16C 19/36

(54) **SEGMENTED CAGE AND ROLLER BEARING**

(30) Priority: 07.02.2014 JP 2014021977; 07.02.2014 JP 2014022134; 12.02.2014 JP 2014024327
(71) Applicant: JTEKT Corporation, Osaka-shi, Osaka 542-8502 (JP)
(72) Inventor: YASUDA, Hirotaka, Osaka-shi Osaka 542-8502 (JP)
(74) Representative: Winter, Brandl, Fürniss, Hübner, Röss, Kaiser, Polte - Partnerschaft mbB
(86) International application number: PCT/JP2015/052900
(87) International publication number: WO 2015/119088

(57) **Abstract**

A split cage has a plurality of cage segments 6 each having a pair of rim portion 21 and 22 and a pair of columnar portions 23 and 24. Taper rollers are put into pockets 25 from radially outer sides of the cage segments 6. The columnar portions 23 and 24 have holding portions 31, 32, 33 and 34. The holding portions 31, 32, 33 and 34 of each cage segment 6 are provided on both the radially outer side and the radially inner side so as to protrude toward a corresponding one of the taper rollers. In addition, the holding portions 31, 32, 33 and 34 abut against the outer circumferential surface of a corresponding one of the taper rollers so as to position the rollers in a radial direction of the cage segment 6. The holding portions 31 and 33 on the radially outer side from which the taper roller is put into the pocket 25 are provided in axially central regions of the columnar portions 23 and 24.

## Description

### Technical Field

The present invention relates to a split cage constituted by a plurality of cage segments, and a roller bearing provided with the split cage.

### Background Art

A split cage constituted by a plurality of cage segments has been known as a cage in which a plurality of rollers rolling between an inner ring and an outer ring in a roller bearing are held circumferentially at predetermined intervals (for example, see Patent Literature 1 or 2). The cage segments are arrayed circumferentially and annularly in an annular space between the inner ring and the outer ring. Each cage segment has a single pocket receiving a single roller.

In addition, as such a split cage, a "roller guide type" cage is often used. In the "roller guide type" cage, cage segments are positioned radially by rollers respectively in order to prevent the cage segments from wearing due to contact with the inner ring and the outer ring.

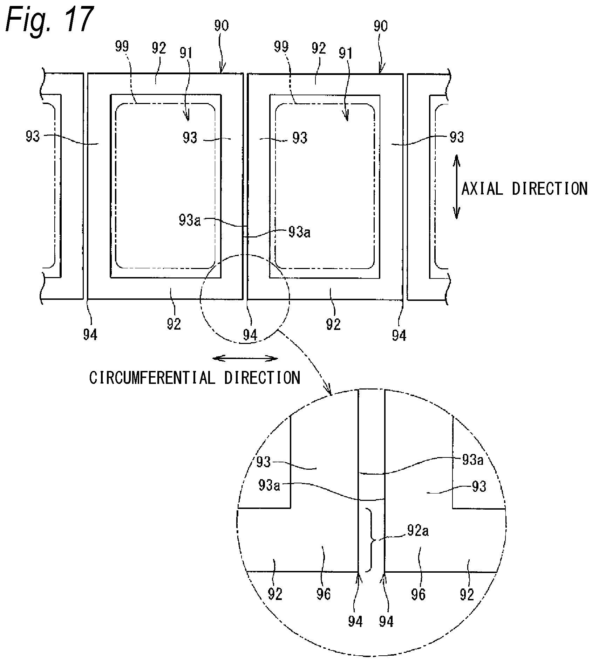

Fig. 17 is a schematic explanatory view in which a part of a split cage is observed from the radially outer side. Each cage segment 90 shown in Fig. 17 has a single pocket 91 receiving a single roller 99. Each cage segment 90 has a pair of rim portions 92 and a pair of columnar portions 93. The rim portions 92 are separated from each other axially at a predetermined interval so as to be opposed to each other. The columnar portions 93 are separated from each other circumferentially at a predetermined interval so as to be opposed to each other. The pocket 91 is formed among the pair of rim portions 92 and the pair of columnar portions 93.

A roller bearing is characterized in that the radial load capacity is larger than that of a ball bearing. For example, the roller bearing can be used in large-scaled equipment such as a power generator. A typical roller bearing has an inner ring, an outer ring, a plurality of rollers provided rollably between the inner ring and the outer ring, and a cage holding the rollers circumferentially at equal intervals (for example, see Patent Literature 3).

A cage disclosed in Patent Literature 3 is a split cage constituted by a plurality of cage segments. The cage segments are arrayed circumferentially and annularly in an annular space between an inner ring and an outer ring. Each cage segment has a pocket receiving a roller.

### Citation List

### Patent Literature

[Patent Literature 1] JP-A-2011-133061
[Patent Literature 2] JP-A-2007-247687
[Patent Literature 3] JP-A-2007-263304

### Summary

### Technical Problem

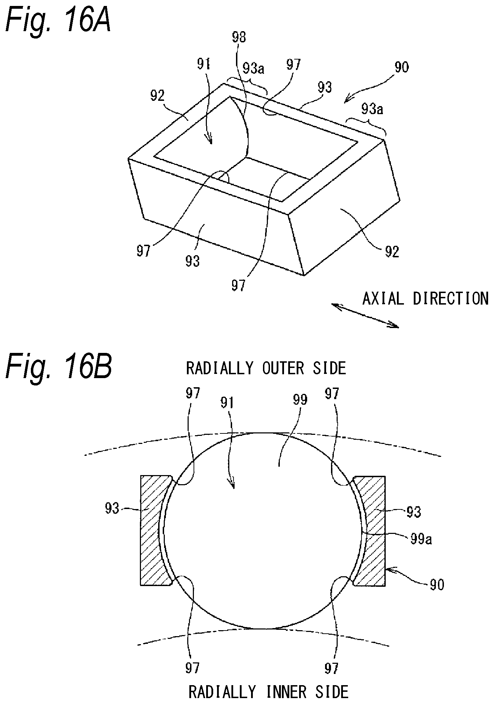

As shown in Fig. 16(A), each cage segment belonging to such a roller guide type split cage has a pair of rim portions 92 and 92, and a pair of columnar portions 93 and 93. The rim portions 92 and 92 are separated from each other axially at a predetermined interval so as to be opposed to each other. The columnar portions 93 and 93 are provided between the rim portions 92 and 92. A region surrounded by the rim portions 92 and 92 and the columnar portions 93 and 93 serves as a single pocket 91 for receiving a single roller. As shown in Fig. 16(B), each of the columnar portions 93 and 93 has holding portions 97 on both the radially outer side (outer ring side) and the radially inner side (inner ring side) of the columnar portion 93. The holding portions 97 are provided to protrude (bulge) toward a roller 99. Each holding portion 97 is provided all over the axial length of the columnar portion 93 (see Fig. 16(A)). The holding portions 97 abuts against an outer circumferential surface 99a of the roller 99 (see Fig. 16(B)) so that the cage segment 90 can be radially positioned by the roller 99.

For example, in order to put the roller 99 into the pocket 91 of the cage segment 90 from the radially outer side when the roller bearing provided with the split cage is assembled, the roller 99 must get over the holding portions 97 provided in the columnar portions 93 and 93 and located on the radially outer side. When the roller 99 gets over the holding portions 97, the columnar portions 93 and 93 including the holding portions 97 respectively are elastically deformed all over their axial lengths. That is, the work of putting the roller 99 into the pocket 91 can be attained when the columnar portions 93 and 93 including the holding portions 97 located on the radially outer side respectively are pushed and elastically deformed by the roller 99.

When the columnar portions 93 and 93 are elastically deformed all over their axial lengths in this manner, for example, a part where a columnar portion 93 and a rim portion 92 are connected while intersecting each other in Fig. 16(A), that is, a corner portion 98 of the pocket 91 may serve as a start point to damage the cage segment 90. Particularly when elastic deformation is large in the axially opposite side portions (parts on the rim portion side) 93a of the columnar portion 93, large local stress occurs in each corner portion 98 of the pocket 91. Thus, damage occurs easily.

It is therefore an object of the invention to provide a split cage capable of preventing each corner portion of a pocket of a cage segment from serving as a start point to damage the cage segment when a roller is put into the pocket of the cage segment, and a roller bearing provided with the split cage.

In addition, in the state where the cage segments 90 have been arrayed in the annular space between the inner ring and the outer ring, a clearance is provided between circumferentially adjacent ones of the cage segments 90. When the roller bearing rotates, adjacent ones of the cage segments 90 may collide with each other or abut against each other. On this occasion, outer side surfaces 93a of the columnar portions 93 may collide (abut) with each other. In addition, when one cage segment 90 is inclined, a pointed corner portion 94 of the outer side surface 93a of the cage segment 90 may collide with a part of an outer side surface 93a of another cage segment 90 adjacent thereto. Thus, there is a fear that the adjacent cage segment 90 may be damaged due to the collision.

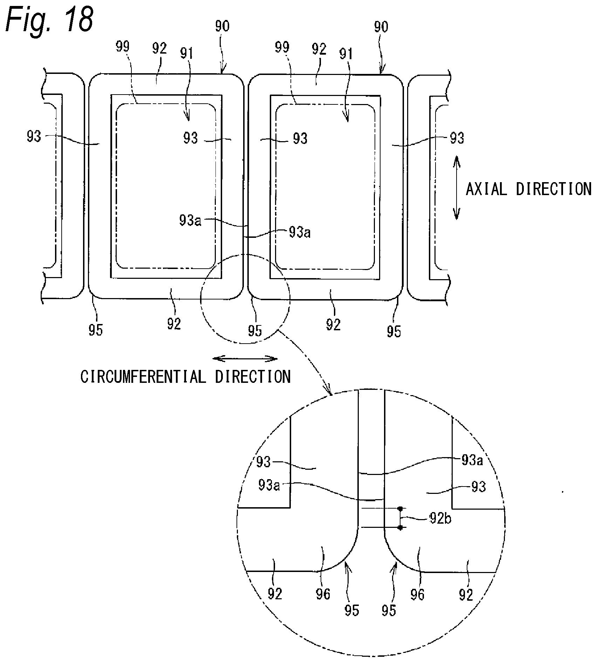

It can be therefore considered that corner portions 95 of outer side surfaces 93a of columnar portions 93 belonging to each cage segment 90 are formed into arc shapes in section, as shown in Fig. 18. However, in this case, there is a fear that the strength of the cage segment 90 may deteriorate, as will be described below.

That is, when circumferentially adjacent ones of the cage segments 90 abut (collide) against each other, a circumferential load (impact load) acts on each cage segment 90 due to the abutment. When each cage segment 90 is constituted like a rectangular frame by a pair of rim portions 92 and a pair of columnar portions 93, the load (impact load) caused by the abutment is applied to the rim portions 92. That is, the rim portions 92 are designed to resist the load.

Therefore, when each corner portion 94 is formed not into an arc shape in section but into a pointed shape as shown in the enlarged view of Fig. 17, a load caused by abutment (collision) between circumferentially adjacent ones of the cage segments 90 can be transmitted directly between the rim portions 92 through contact surfaces 92a each having a wide area. That is, due to the configuration in which the load caused by the abutment can be applied to the rim portions 92 effectively, strength against the load (impact load) caused by the abutment can be secured.

On the other hand, when each corner portion 95 is formed into an arc shape in section as shown in the enlarged view of Fig. 18, a load caused by abutment (collision) between circumferentially adjacent ones of the cage segments 90 is transmitted between rim portion 92 through contact surfaces 92b each having a narrow area. The contact width between the contact surfaces 92b with which the load (impact load) caused by the abutment can be transmitted directly between the rim portions 92 is reduced as compared with the case of the configuration shown in Fig. 17. That is, the load (impact load) caused by the abutment is partially transmitted directly between the rim portions 92 through the contact portions 92b, while most of the rest of the load is transmitted between the rim portions 92 through columnar portions 93 and connection portions 96 between the columnar portions 93 and the rim portions 92. As a result, when each corner portion 95 is formed into an arc shape in section, strength against the load (impact load) caused by the abutment deteriorates due to the configuration in which large bending stress acts on each connection portion 96.

It is therefore an object of the invention to provide a split cage having a configuration capable of preventing cage segments from colliding with each other through pointed corner portions thereof, and capable of preventing strength of each cage segment from deteriorating, and a roller bearing provided with the split cage.

In addition, the roller bearing is characterized in that the load capacity is larger than that of a ball bearing. However, the roller bearing has a tendency to increase in rotational resistance (rotational torque). The rotational resistance is chiefly attributed to viscous resistance of lubricant between each pocket of the cage and each roller as well as viscous resistance of lubricant between each of the inner and outer rings and each roller. Therefore, when the viscous resistance of lubricant between each pocket of the cage and each roller is reduced, the rotational resistance in the roller bearing can be reduced.

It is therefore an object of the invention to provide a cage capable of reducing viscous resistance of lubricant between each pocket and each roller to thereby reduce rotational resistance of a roller bearing, and a roller bearing provided with the cage.

### Solution to Problem

(1) The invention provides a split cage for a roller bearing, including:
   a plurality of cage segments, each of the cage segments including a pair of rim portions and a pair of columnar portions, the pair of rim portions being separated from each other axially at a predetermined interval so as to be opposed to each other, the pair of columnar portions being provided between the pair of rim portions and forming a pocket together with the pair of rim portions so that a roller can be received in the pocket,
      wherein
      the roller is put into the pocket from one side of a radially outer side and a radially inner side of each of the cage segments while the plurality of cage segments are arrayed circumferentially in an annular space between an inner ring and an outer ring,
      each of the columnar portions includes holding portions which protrude toward the roller on both the radially outer side and the radially inner side and abut against an outer circumferential surface of the roller to thereby position the roller in a radial direction of the cage segments, and
      the holding portions on the one side from which the roller is put into the pocket are provided in axially central regions of the columnar portions.

According to the invention, work of putting a roller into a pocket from one side of the radially outer side and the radially inner side of each cage segment can be attained when the columnar portions including the holding portions on the one side are pushed and elastically deformed by the roller. On this occasion, the columnar portions are elastically deformed comparatively largely in the axially central regions where the holding portions on the one side have been formed. However, the columnar portions are not deformed largely in regions on the axially opposite sides of each axially central region. It is therefore possible to reduce local stress (stress concentration) occurring in each corner portion of the pocket. Thus, the cage segment can be prevented from being damaged with the corner portion as a start point.

(2) In addition, it is preferable that a recess portion having a concave curved outline shape is formed in a corner portion of each of the pockets. Due to the recess portion, the corner portion of the pocket can be prevented from interfering with a corner portion of a roller. Further, due to the concave curved outline shape of the recess portion, stress occurring in the corner portion of the pocket can be relieved.
(3) In addition, it is preferable that the recess portion according to the aforementioned configuration (2) includes a concave arc surface having a radius larger than a radius of a small arc surface formed for chamfering a corner portion of each of the rollers. In this case, a concave arc surface having a large radius can be formed in the corner portion of the pocket. Thus, stress occurring in the corner portion of the pocket can be relieved more.

(4) In addition, it is preferable that each of axially opposite side portions in each of the holding portions on the one side has a side portion slope whose protrusion height is lower as it goes toward the rim portion side. In this case, the sectional shapes of the columnar portions can be prevented from suddenly changing due to the presence of the holding portions. Thus, occurrence of local stress in the regions where the holding portion have been formed can be suppressed.

(5) In addition, it is preferable that each of the holding portions on the one side includes a top portion, an inner slope and an outer slope. Protrusion height of the top portion is highest. The inner slope and the outer slope extend on the radially inner and outer sides from the top portion respectively. Protrusion height of each of the inner slope and the outer slope is reduced gradually. In this case, when a roller is put into a pocket, the roller is guided by the outer slope. Then the roller can get over the top portion. Thus, the roller can be put into the pocket easily.

(6) A roller bearing according to the invention includes an inner ring, an outer ring, a plurality of rollers disposed rollably in an annular space between the inner ring and the outer ring, and a split cage according to any one of the aforementioned configurations (1) through (5).

According to the invention, when a roller is put into a pocket of each cage segment in order to assemble the roller bearing, the cage segment can be prevented from being damaged with a corner portion of the pocket as a start point.

(7) The invention provides a split cage for a roller bearing, including a plurality of cage segments receiving rollers and arrayed annularly and circumferentially, wherein: each of the cage segments includes an outer side surface that is opposed to another cage segment circumferentially adjacent thereto; and protrusion portions each including a part having an arc shape in section are provided in corner portions extending radially in the outer side surface and/or corner portions extending axially in the outer side surface.

According to the invention, each cage segment has an outer side surface opposed to another cage segment circumferentially adjacent thereto, and protrusion portions are provided in corner portions of the outer side surface. Each protrusion portion includes a part having an arc shape in section. Accordingly, cage segments circumferentially adjacent to each other can be prevented from colliding with each other through their pointed corner portions. Thus, the cage segments can be prevented from being damaged. Further, even when the corner portions of the cage segments have arc shapes in section, the parts formed into the arc shapes are protrusion portions. Therefore the contact width between contact surfaces through which a load caused by abutment (collision) between the cage segments can be transmitted directly between the rim portions can be prevented from decreasing, so that strength against the load (impact load) caused by the abutment can be prevented from deteriorating.

(8) In addition, it is preferable that the part having an arc shape in section in each of the protrusion portions is provided in a region close to another cage segment that is located circumferentially adjacently thereto so that the another cage segment can abut against the part. Thus, the effect of preventing the cage segment from being damaged can be enhanced more.

(9) In addition, a roller bearing according to the invention includes an inner ring, an outer ring, a plurality of rollers disposed rollably in an annular space between the inner ring and the outer ring, and a split cage according to the aforementioned configuration (7) or (8).

According to the invention, cage segments circumferentially adjacent to each other in the split cage can be prevented from colliding with each other through their pointed corner portions. In addition, strength against a load (impact load) caused by abutment between the cage segments can be prevented from deteriorating. Thus, the roller bearing provided with the split cage formed in this manner can be obtained.

(10) The invention provides a cage including a pair of rim portions separated from each other axially at a predetermined interval so as to be opposed to each other, and columnar portions separated from one another circumferentially at predetermined intervals between the pair of rim portions, so that pockets that can receive rollers of a roller bearing are formed among the pair of rim portions and circumferentially adjacent ones of the columnar portions; wherein: an inner side surface of each of the columnar portions includes contact surface portions and a recess portion, the contact surface portions being provided on axially opposite sides of the inner side surface so that the contact surface portions can abut against an outer circumferential surface of one of the rollers, the recess portion being provided at an axial center of the inner side surface so that the recess portion cannot abut against the outer circumferential surface of the roller.

In the roller bearing, there is a lubricant between the cage (each pocket) and each roller. When the contact area between the pocket of the cage and the roller is large, the rotational resistance (rotational torque) of the roller bearing may increase due to the viscous resistance of the lubricant.

According to the invention, therefore, a recess portion (first recess portion) is provided in the inner side surface of each columnar portion opposed to the outer circumferential surface of the roller put into the pocket so that the area of the region where the pocket abuts against the outer circumferential surface of the roller can be reduced. Thus, the rotational resistance of the roller bearing can be reduced.

In addition, for example, when it is necessary to elastically deform each columnar portion in order to put the roller into the pocket, deformation in the axially opposite side end portions of the columnar portion are restricted by the rim portions. Thus, large stress occurs in the end portions. Therefore, higher strength is required in the axially opposite sides of the columnar portion than in the axially central portion thereof.

To this end, according to the invention, the recess portion is provided in, of the inner side surface of the columnar portion, not the axially opposite sides where the stress becomes comparatively large, but the axially central portion. Thus, strength can be secured in the axially opposite sides of the columnar portion.

(11) In addition, the cage for a roller bearing may be provided with a plurality of cage segments each including a pair of the columnar portions provided between the pair of rim portions. The pockets receiving the rollers are formed by the pairs of the columnar portions together with the pair of rim portions. The plurality of cage segments are arrayed circumferentially in an annular space formed between an outer ring and an inner ring of the roller bearing.

In this case, the area of the region where the pocket of each cage segment abuts against a corresponding one of the rollers can be reduced, so that the rotational resistance of the roller bearing can be reduced.

(12) In addition, it is preferable that an inner side surface of each of the rim portions includes a second contact surface portion that can abut against an end surface of a corresponding one of the rollers, and a second recess portion that cannot abut against the end surface of the roller.

In this case, the area of the region where each pocket of the cage abuts against an end surface of a corresponding one of the rollers can be reduced, so that the rotational resistance of the roller bearing can be reduced.

(13) In addition, a roller bearing according to the invention includes an inner ring, an outer ring, a plurality of rollers disposed in an annular space between the inner ring and the outer ring so as to rotate, and a cage according to any one of the aforementioned configurations (10) through (12).

According to the invention, the area of the region where each pocket of the cage abuts against the outer circumferential surface of a corresponding one of the rollers can be reduced, so that the viscous resistance of lubricant between the pocket and the roller can be reduced. Thus, the rotational resistance of the roller bearing can be reduced.

### Advantageous Effects of Invention

According to the split cage according to the invention, when a roller is put into a pocket of each cage segment, local stress (stress concentration) occurring in each corner portion of the pocket can be reduced. Thus, the cage segment can be prevented from being damaged with the corner portion as a start point.

According to the invention, cage segments circumferentially adjacent to each other can be prevented from colliding with each other through their pointed corner portions, while strength against a load (impact load) caused by abutment between the cage segments can be prevented from deteriorating.

According to the cage of the invention, the viscous resistance of lubricant between each pocket and each roller is reduced. Thus, the rotational resistance of the roller bearing can be reduced.

### Brief Description of Drawings

Fig. 1 is a main portion sectional view showing a roller bearing provided with a cage according to the invention.
Fig. 2 is a side view showing the roller bearing.
Fig. 3 is a perspective view showing a cage segment.
Fig. 4 is a sectional view taken from the arrow direction A-A in Fig. 3.
Fig. 5 is an explanatory view in which an outer holding portion of a columnar portion is observed from the radially outer side.
Fig. 6 is a sectional view of the columnar portion.
Fig. 7 is a view in which a part of the cage segment is observed from the radially outer side.
Fig. 8 is a view showing another form of a corner portion of a pocket.
Fig. 9 is a schematic explanatory view in which a part of a split cage including the cage segment shown in Fig. 3 is observed from the radially outer side.
Fig. 10 is a perspective view showing (another form of) a cage segment.
Fig. 11 is a schematic explanatory view in which a part of a split cage including the cage segment shown in Fig. 10 is observed from the radially outer side.
Figs. 12(A) and 12(B) are explanatory views showing modifications of protrusion portions of cage segments shown in Fig. 11.
Figs. 13(A) and 13(B) are explanatory views showing modifications of protrusion portions of cage segments shown in Fig. 9.
Fig. 14 is a sectional view taken from the arrow direction B-B in Fig. 3.
Fig. 15 is a sectional view taken from the arrow direction C-C in Fig. 3.
Fig. 16(A) is a perspective view of a cage segment in the background art, and Fig. 16(B) is a sectional view thereof.
Fig. 17 is a schematic explanatory view in which a part of a split cage (part 1) in the background art is observed from the radially outer side.
Fig. 18 is a schematic explanatory view in which a part of a split cage (part 2) in the background art is observed from the radially outer side.

### Description of Embodiments

An embodiment of the invention will be described below with reference to the drawings.

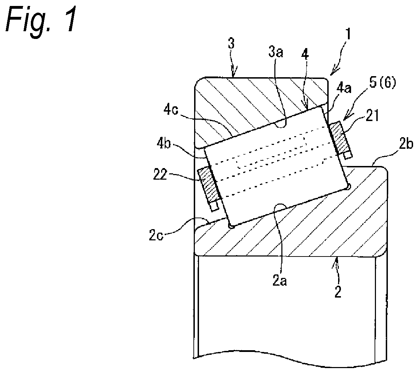

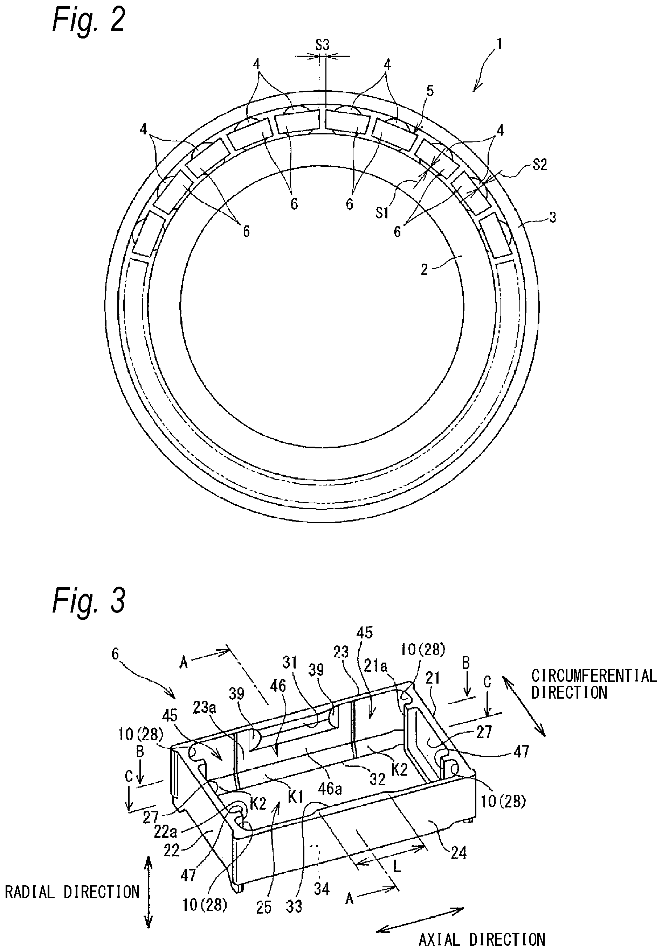

Fig. 1 is a main portion sectional view showing a roller bearing provided with a cage according to the invention. Fig. 2 is a side view showing the roller bearing. A roller bearing 1 according to the embodiment is a taper roller bearing, including an inner ring 2, an outer ring 3, a plurality of taper rollers 4 disposed rollably in an annular space between the inner ring 2 and the outer ring 3, and a cage 5 holding the taper rollers 4. The cage 5 according to the embodiment is a split cage having a plurality of cage segments 6. The inner ring 2, the outer ring 3 and the taper rollers 4 are made of steel such as bearing steel.

In Fig. 1, an outer ring raceway surface 3a made of a taper surface is formed in the inner circumference of the outer ring 3 so that the taper rollers 4 can roll thereon. An inner ring raceway surface 2a made of a taper surface is formed in the outer circumference of the inner ring 2 so that the taper rollers 4 can roll thereon. A large rib portion 2b having a large outer diameter and a small rib portion 2c having a small outer diameter are provided on the axially opposite sides of the inner ring 2 so as to protrude radially outward. A large end surface 4a of each taper roller 4 on axially one side abuts against the large rib portion 2b. Lubricant such as grease is provided in the bearing inside where the taper rollers 4 and the split cage 5 are disposed. The taper roller bearing 1 is lubricated by the grease.

The split cage 5 has a plurality of cage segments 6 (see Fig. 2). The split cage 5 is constituted by the plurality of cage segments 6 arrayed annularly and circumferentially in an annular space between the inner ring 2 and the outer ring 3.

In addition, the taper roller bearing 1 is of a "roller guide type" in which the cage segments 6 are guided by the taper rollers 4 respectively. That is, the cage segments 6 are positioned radially (and axially) by the taper rollers 4. Thus, each cage segment 6 is prevented from touching the inner ring raceway surface 2a and the outer ring raceway surface 3a.

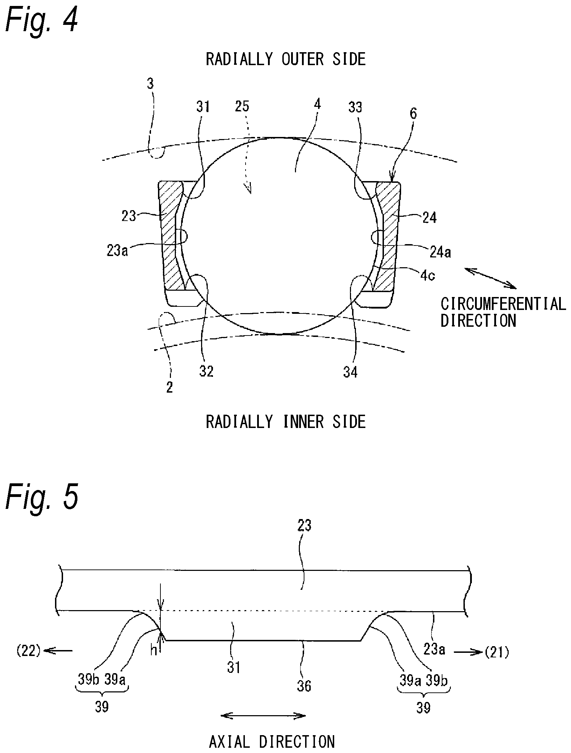

In order to attain the guidance by the rollers, predetermined radial clearances S1 and S2 are provided between the inner circumferential surface of each cage segment 6 and the outer circumferential surface of the inner ring 2 and between the outer circumferential surface of each cage segment 6 and the inner circumferential surface of the outer ring 3 respectively. In addition, a predetermined circumferential clearance S3 is provided between adjacent ones of the cage segments 6. As will be described later, each cage segment 6 has holding portions 31, 32, 33 and 34 (see Fig. 3 and Fig. 4) that abut against an outer circumferential surface 4c of a corresponding taper roller 4 so as to radially position the cage segment 6.

Fig. 3 is a perspective view showing each cage segment 6. Fig. 4 is a sectional view taken from the arrow direction A-A in Fig. 3. Each cage segment 6 according to the embodiment is made of synthetic resin and formed into a rectangular frame-like shape by injection molding. Specifically, the cage segment 6 has a pair of rim portions 21 and 22 and a pair of columnar portions 23 and 24. The first rim portion 21 and the second rim portion 22 are separated from each other at a predetermined interval in the axial direction of the taper roller 4 held therein, so as to be opposed to each other. The first columnar portion 23 and the second columnar portion 24 are separated from each other at a predetermined interval in a direction (circumferential direction of the split cage 5) perpendicular to the axial direction, so as to be opposed to each other. The columnar portions 23 and 24 are provided between the rim portions 21 and 22. To say other words, the rim portions 21 and 22 are provided between the columnar portions 23 and 24. The rim portions 21 and 22 and the columnar portions 23 and 24 are connected integrally into a rectangular frame-like shape. In the cage segment 6, a single pocket 25 for receiving a single taper roller 4 is formed by the rim portions 21 and 22 and the columnar portions 23 and 24. That is, a region surrounded by the rim portions 21 and 22 and the columnar portions 23 and 24 serves as the pocket 25. Incidentally, the taper roller 4 is not shown in Fig. 3.

The rim portions 21 and 22 are formed into straight plate-like shapes, and inner side surfaces 21 a and 22a thereof are formed into surfaces extending radially and circumferentially. In the embodiment, a recess portion (concave portion) 27 is provided at the center of each inner side surface 21 a, 22a.

The columnar portions 23 and 24 are formed into straight plate-like shapes, and inner side surfaces 23a and 24a thereof are formed into surfaces extending radially and axially. In the embodiment, holding portion 31, 32, 33 and 34 are provided to rise from the inner side surfaces 23a and 24a. Further, in the embodiment, contact surface portions 45 and a recess portion 46 are provided in each inner side surface 23a, 24a. The contact surface portions 45 can abut against the outer circumferential surface 4c of the taper roller 4. The recess portion 46 cannot abut against the outer circumferential surface 4c of the taper roller 4.

In addition, recess portions (concave portions) 28 are provided in respective regions between the rim portions 21 and 22 and the columnar portion 23 and between the rim portions 21 and 22 and the columnar portion 24, that is, in four corner portions 10 of the pocket 25.

The recess portions 27, 46 and 28, the holding portions 31, 32, 33 and 34, etc. will be described later.

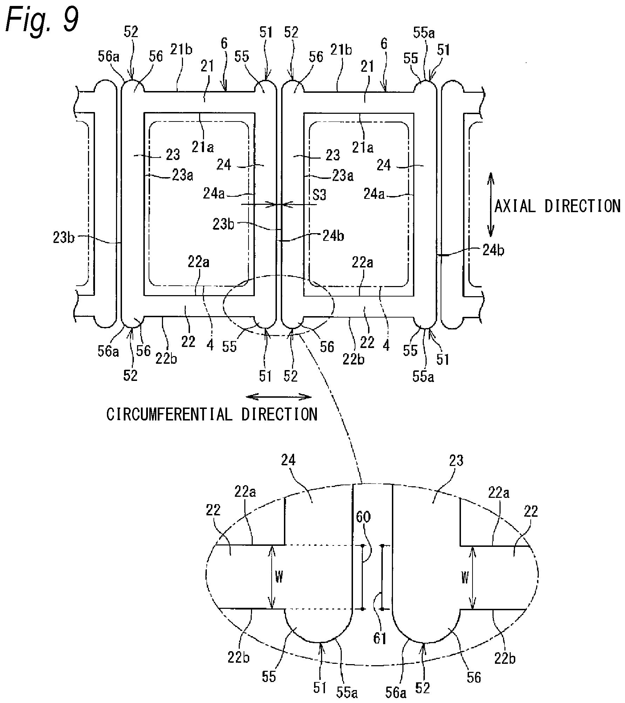

Fig. 9 is a schematic explanatory view in which a part of the split cage including the cage segment 6 shown in Fig. 3 is observed from the radially outer side. As shown in Fig. 9, each cage segment 6 has an outer side surface 23b (24b) opposed to another cage segment 6 circumferentially adjacent thereto. The outer side surface 23b (24b) is a surface belonging to the columnar portion 23 (24) and facing in the circumferential direction. As described previously (see Fig. 2), the predetermined circumferential clearance S3 is provided between adjacent ones of the cage segments 6.

Accordingly, when the taper roller bearing 1 rotates, adjacent ones of the cage segments 6 may collide with each other or abut against each other. On this occasion, the outer side surface 24b of the columnar portion 24 of the cage segment 6 located on the left side of the clearance S3 shown in Fig. 9 (hereinafter referred to as left cage segment 6) may collide (abut) against the outer side surface 23b of the columnar portion 23 of the cage segment 6 located on the right side of the clearance S3 (hereinafter referred to as right cage segment 6). In addition, when the left cage segment 6 is inclined, a corner portion 51 of the outer side surface 24b of the left cage segment 6 may collide with a part of the outer side surface 23b of the columnar portion 23 belonging to the right cage segment 6 located adjacently thereto.

Therefore, according to the embodiment, as shown in Fig. 3 and Fig. 9, a protrusion portion 55 including a part 55a (see the enlarged view of Fig. 9) having an arc shape in section is provided in the corner portion 51 extending radially in the outer side surface 24b of the second columnar portion 24 belonging to the left cage segment 6. In the embodiment, the whole of the protrusion portion 55 is formed as the part 55a having an arc shape in section. That is, the protrusion portion 55 having an arc shape in section is provided in the corner portion 51. In addition, such a protrusion portion 55 is provided in each of the corner portions 51 on the axially opposite sides of the outer side surface 24b of the columnar portion 24. Each corner portion 51 is a part in which the outer side surface 22b (21 b) of the rim portion 22 (21) intersects the outer side surface 24b of the columnar portion 24. In the intersection part, the protrusion portion 55 is provided. The protrusion portion 55 protrudes (bulges) axially outward from the outer side surface 22b (21 b). Incidentally, the protrusion portion 55 does not protrude circumferentially from the outer side surface 24b of the columnar portion 24.

In addition, a protrusion portion 56 is provided in the first columnar portion 23 belonging to the left cage segment 6 in the same manner. That is, a protrusion portion 56 including a part 56a having an arc shape in section is provided in a corner portion 52 extending radially in the outer side surface 23b of the first columnar portion 23. In the embodiment, the whole of the protrusion portion 56 is formed as the part 56a having an arc shape in section. In addition, such a protrusion portion 56 is provided in each of the corner portions 52 on the axially opposite sides of the outer side surface 23b of the columnar portion 23. Each corner portion 52 is a part in which the outer side surface 22b (21 b) of the rim portion 22 (21) intersects the outer side surface 23b of the columnar portion 23. In the intersection part, the protrusion portion 56 is provided. The protrusion portion 56 protrudes (bulges) axially outward from the outer side surface 22b (21 b). Incidentally, the protrusion portion 56 does not protrude circumferentially from the outer side surface 23b of the columnar portion 23.

In this manner, the columnar portion 24 (23) of each cage segment 6 includes the outer side surface 24b (23b) opposed to another cage segment 6 circumferentially adjacent thereto, and the protrusion portions 55 (56) each including the part 55a (56a) having an arc shape in section are provided in the corner portions 51 (52) extending in the axial direction of the outer side surface 24b (23b).

Thus, due to the protrusion portions 55 (56) each having an arc shape in section, circumferentially adjacent ones of the cage segments 6 can be prevented from colliding with each other through their pointed corner portions, so that the cage segments 6 can be prevented from being damaged.

Further, as shown in the enlarged view of Fig. 9, even when each corner portion 51 of the columnar portion 24 is formed into an arc shape in section, the part formed into the arc shape is made of the protrusion portion 55. Accordingly, the outer side surface 24b of the columnar portion 24 can include contact surfaces 60 on the axially opposite sides thereof. Each contact surface 60 has a width equal to the whole width W of the rim portion 22 from the inner side surface 22a to the outer side surface 22b. The contact surface 60 can abut against a similar contact surface 61 of another cage segment 6 opposed to the contact surface 60. That is, the contact width between the contact surfaces (60 and 61) by which a load caused by abutment (collision) between the cage segments 6 can be transmitted directly between the rim portions 22 can be prevented from being reduced. Thus, strength against the load (impact load) caused by the abutment can be prevented from decreasing.

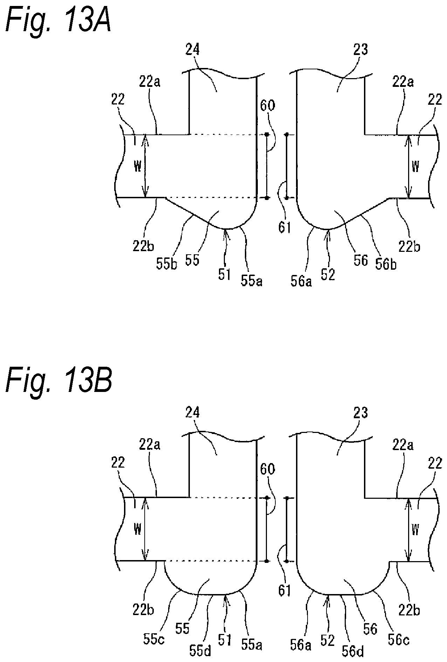

Figs. 13 are explanatory views showing modifications of the protrusion portions 55 and 56 of the cage segments 6 shown in Fig. 9. As shown in Fig. 13(A), the protrusion portion 55 including a part 55a having an arc shape in section is provided in each corner portion 51. The protrusion portion 55 includes a part 55a having an arc shape in section, and a part (slope part) 55b having a straight shape in section. In the same manner, the protrusion portion 56 includes a part 56a having an arc shape in section, and a part (slope part) 56b having a straight shape in section.

On the other hand, the protrusion portion 55 shown in Fig. 13(B) includes a first part 55a having an arc shape in section, a second part 55c having an arc shape in section, and a part 55d connecting the parts 55a and 55c and having a straight shape in section. The first part 55a is a part close to another cage segment (6) that is located circumferentially adjacently thereto so that the cage segment (6) can abut against the first part 55a. The second part 55c is a part on the center side of the rib portion 22. In the same manner, the protrusion portion 56 includes a first part 56a having an arc shape in section, a second part 56c having an arc shape in section, and a part 56d connecting the parts 56a and 56c and having a straight shape in section.

In this manner, the protrusion portion 55 (56) including the part 55a (56a) having an arc shape in section is provided in each corner portion 51 (52). In the protrusion portion 55 (56), the part 55a (56a) having an arc shape in section is provided at least in a region close to another cage segment (6) that is located circumferentially adjacent thereto so that the cage segment (6) can abut against the part 55a (56a). That is, the sectional shape of the protrusion portion 55 (56) does not have to have a perfect arc forming 180 degrees but may include a straight part partially.

Incidentally, according to another modification, which is not shown, the sectional shape of the protrusion portion 55 (56) may have straight shapes on opposite sides and an arc shape at the center located between the straight shapes.

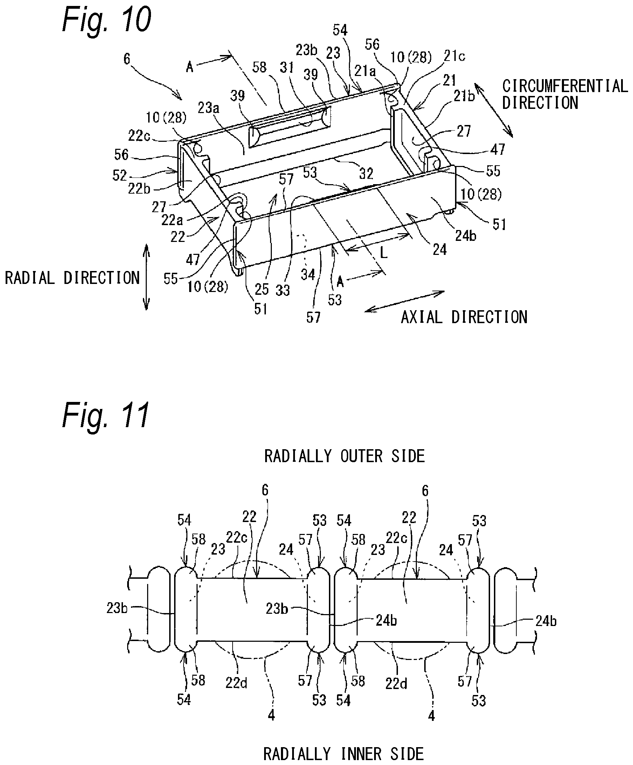

In addition, Fig. 10 is a perspective view showing another form of each cage segment 6. In the cage segment 6, a protrusion portion 55 (56) including a part having an arc shape in section is provided in each corner portion 51 (52) extending in the radial direction of an outer side surface 24b (23b) of a columnar portion 24 (23) in the same manner as in the cage segment 6 shown in Fig. 3. Further, a protrusion portion 57 (58) including a part having an arc shape in section is also provided in each corner portion 53 (54) extending in the axial direction of the outer side surface 24b (23b).

The corner portion 53 of the second columnar portion 24 is a part in which the outer side surface 24b of the columnar portion 24 intersects a surface of the columnar portion 24 facing outward in the radial direction. In the intersection part, a protrusion portion 57 including a part having an arc shape in section is provided. As shown in Fig. 11, the protrusion portion 57 protrudes (bulges) outward in the radial direction from a surface 22c of the rim portion 22 facing outward in the radial direction.

In addition, such a corner portion 53 exists not only on the radially outer side of the outer side surface 24b of the columnar portion 24 but also on the radially inner side. A protrusion portion 57 including a part having an arc shape in section is also provided in a part where the outer side surface 24b intersects a surface of the columnar portion 24 facing inward in the radial direction. As shown in Fig. 11, the protrusion portion 57 protrudes (bulges) inward in the radial direction from a surface 22d (21 d) of the rim portion 21, 22 facing inward in the radial direction.

In addition, as shown in Fig. 11, a protrusion portion 58 including a part having an arc shape in section is also provided in each corner portion 54 of the first columnar portion 23 in the same manner. That is, the corner portion 54 of the first columnar portion 23 is a part where the outer side surface 23b of the columnar portion 23 intersects a surface of the columnar portion 23 facing outward in the radial direction. The protrusion portion 58 is provided in the intersection part. The protrusion portion 58 protrudes (bulges) outward in the radial direction from a surface 22c of the rim portion 22 facing outward in the radial direction.

In addition, such a corner portion 54 exists not only on the radially outer side of the columnar portion 23 but also on the radially inner side. A protrusion portion 58 is also provided in a part where the outer side surface 23b intersects a surface of the columnar portion 23 facing inward in the radial direction. The protrusion portion 58 protrudes inward in the radial direction from a surface 22d of the rim portion 22 facing inward in the radial direction.

In the cage segment 6 configured thus as shown in Fig. 10 and Fig. 11, the protrusion portions 55 (56) each including a part having an arc shape in section are provided in the corner portions 51 (52) extending in the radial direction of the outer side surface 24b (23b) of the columnar portion 24 (23). In addition, the protrusion portions 57 (58) each including a part having an arc shape in section are also provided in the corner portions 53 (54) extending in the axial direction of the outer side surface 24b (23b).

Accordingly, the cage segments 6 circumferentially adjacent to each other can be prevented from colliding with each other through their pointed corner portions. Thus, the cage segments 6 can be prevented from being damaged. Further, even when the corner portions (51, 52, 53 and 54) of the cage segments 6 have arc shapes in section, the parts formed into the arc shapes are protrusion portions (55, 56, 57 and 58) in the same manner as in the embodiment shown in Fig. 3. Therefore the contact width between contact surfaces through which a load caused by abutment (collision) between the cage segments 6 can be transmitted directly between the rim portions 22 (21) can be prevented from decreasing, so that strength against the load (impact load) caused by the abutment can be prevented from deteriorating.

Incidentally, the embodiment shown in Fig. 10 has been described in the case where the protrusion portions each having an arc shape in section are provided in both the corner portions 51 (52) extending in the radial direction of the columnar portion 24 (23) and the corner portions 53 (54) extending in the axial direction of the same. However, the protrusion portions 55 (56) in the corner portions 51 (52) extending in the radial direction may be omitted. That is, the protrusion portions each having an arc shape in section may be provided in the corner portions 51 (52) extending in the radial direction of the outer side surface 24b (23b) of the columnar portion 24 (23) and/or the corner portions 53 (54) extending in the axial direction of the outer side surface 24b (23b).

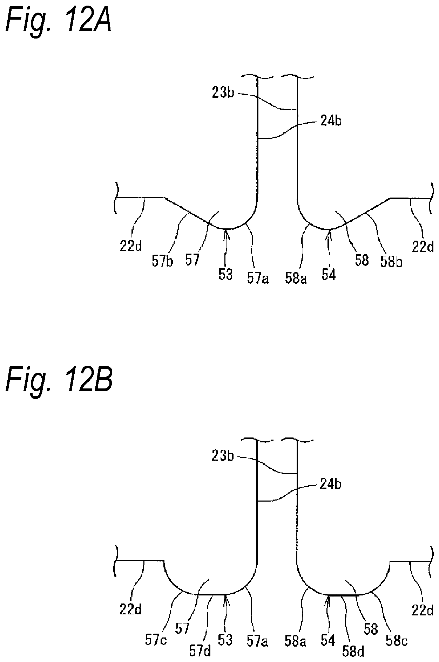

In addition, in the embodiment shown in Fig. 11, the whole of each protrusion 57 (58) is formed as a part having an arc shape in section. However, in the same manner as in the case of each protrusion portion 55 (56) shown in Figs. 13(A) and 13(B), the sectional shape of the protrusion portion 57 (58) does not have to have a perfect arc forming 180 degrees but may include a straight part partially. That is, as shown in Fig. 12(A), the protrusion portion 57, for example, includes a part 57a having an arc shape in section, and a part (slope part) 57b having a straight shape in section. Alternatively, as shown in Fig. 12(B), the protrusion portion 57 includes a first part 57a having an arc shape in section, a second part 57c having an arc shape in section, and a part 57d connecting the parts 57a and 57c and having a straight shape in section.

In this manner, the protrusion portion 57 (58) including the part 57a (58a) having an arc shape in section is provided in each corner portion 53 (54). In the protrusion portion 57 (58), the part 57a (58a) having an arc shape in section is provided at least in a region close to another cage segment (6) that is located circumferentially adjacent thereto so that the cage segment (6) can abut against the part 57a (58a).

Incidentally, according to another modification, which is not shown, the sectional shape of the protrusion portion 57 (58) may have straight shapes on opposite sides and an arc shape at the center located between the straight shapes.

Here, description will be made about assembling of the taper roller bearing 1 provided with the split cage 5 illustrated in the aforementioned embodiments, and positioning of the cage segments 6.

When the taper roller bearing 1 is assembled, a taper roller 4 is put into a pocket 25 from one side of the radially outer side and the radially inner side of each cage segment 6 in Fig. 3 (Fig. 10). Incidentally, in the aforementioned embodiments, the taper roller 4 is inserted from the radially outer side of the cage segment 6 (pocket 25). The radially outer edge of the pocket 25 serves as an insertion port of the taper roller 4.

In Fig. 4, the first columnar portion 23 has a first outer holding portion 31 and a first inner holding portion 32 on the radially outer side and on the radially inner side respectively. The first outer holding portion 31 and the first inner holding portion 32 are provided to protrude (bulge) on the taper roller 4 side. In the same manner, the second columnar portion 24 has a second outer holding portion 33 and a second inner holding portion 34 on the radially outer side and on the radially inner side respectively. The second outer holding portion 33 and the second inner holding portion 34 are provided to protrude (bulge) on the taper roller 4 side. The outer holding portion 31 and the outer holding portion 33 have one and the same shape. The inner holding portion 33 and the inner holding portion 34 have one and the same shape.

The distance between the outer holding portions 31 and 33 (respective positions in the axial direction) is set to be smaller than the diameter of the taper roller 4 (corresponding to the respective positions). In the same manner, the distance between the inner holding portions 32 and 34 (respective positions in the axial direction) is set to be smaller than the diameter of the taper roller 4 (corresponding to the respective positions). Incidentally, the distances are minimum distances. The outer holding portions 31 and 33 can abut against the outer circumferential surface 4c of the taper roller 4 from the radially outer side. The inner holding portions 32 and 35 can abut against the outer circumferential surface 4c of the taper roller 4 from the radially inner side. Thus, the cage segment 6 is positioned with respect to the radial direction. That is, the cage segment 6 is roller-guided by the holding portions 31, 32, 33 and 34 with respect to the radial direction. Incidentally, positional restriction with respect to the axial direction is attained by the inner side surfaces 21 a and 22a of the rim portions 21 and 22 abutting against end surfaces 4a and 4b (see Fig. 1) of the taper roller 4.

As shown in Fig. 3 and Fig. 4, the inner holding portion 32 of the first columnar portion 23 is provided to protrude circumferentially from the inner side surface 23a of the columnar portion 23 in a radially inner region of the columnar portion 23. The inner holding portion 32 is provided all over the axial length of the columnar portion 23 (see Fig. 3). Incidentally, the inner holding portion 34 of the second columnar portion 24 has the same configuration as the inner holding portion 32 of the first columnar portion 23.

On the other hand, as shown in Fig. 3 and Fig. 4, the outer holding portion 31 of the first columnar portion 23 is provided to protrude circumferentially from the inner side surface 23a of the columnar portion 23 in a radially outer region of the columnar portion 23. The outer holding portion 31 is provided not all over the axial length but only in a central region that is a part of the columnar portion 23 (see Fig. 3). Incidentally, the outer holding portion 33 of the second columnar portion 24 has the same configuration as the outer holding portion 31 of the first columnar portion 23. In this manner, the outer holding portion 31 (33) located on the radially outer side from which the taper roller 4 is put into the pocket 25 is provided only in the axially central region of the columnar portion 23 (24). The outer holding portion 31 (33) is absent in axially opposite regions of the columnar portion 23 (24).

Fig. 5 is an explanatory view in which the outer holding portion 31 of the first columnar portion 23 is observed from the radially outer side. The outer holding portion 31 protrudes by a predetermined distance based on the inner side surface 23a of the columnar portion 23. A top portion 36 of the outer holding portion 31 extends in parallel to the inner side surface 23a and like a straight line along the axial direction. The outer holding portion 31 has a side portion slope 39 whose protrusion height h is reduced gradually as it goes toward the rim portions 21 and 22. In the embodiment, the side portion slope 39 is constituted by a composite slope of a flat surface 39a on the top portion 36 side, and an arc surface 39b smoothly connected to the flat surface 39a and the inner side surface 23a. The outer holding portion 33 of the second columnar portion 24 has a similar configuration. Incidentally, the side portion slope 39 does not have to be a composite slope as described above, but may be a slope constituted only by a flat surface or an arc surface.

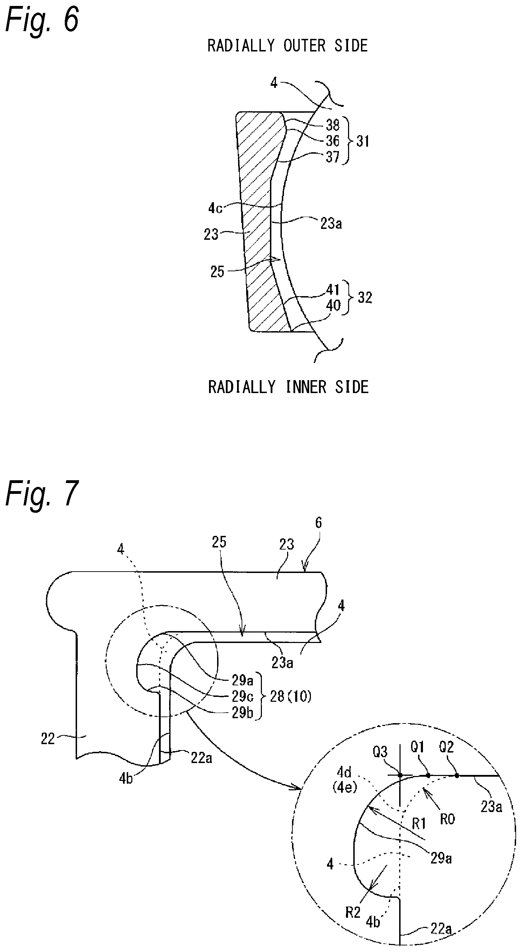

Fig. 6 is a sectional view of the columnar portion 23. The outer holding portion 31 is provided in a radially outer region of the inner side surface 23a of the columnar portion 23. The outer holding portion 31 includes a top portion 36, an inner slope 37 and an outer slope 38. The protrusion height of the top portion 36 is the highest. The inner slope 37 and the outer slope 38 extend on the radially inner side and on the radially outer side from the top portion 36 respectively. The protrusion height of each slope 37, 38 is gradually reduced. The inner slope 37 abuts against the outer circumferential surface 4c of the taper roller 4.

On the other hand, the inner holding portion 32 is provided in a radially inner region of the inner side surface 23a of the columnar portion 23. The inner holding portion 32 includes a top portion 40, and an outer slope 41. The protrusion height of the top portion 40 is the highest. The outer slope 41 extends on the radially outer side from the top portion 40. The protrusion height of the outer slope 41 is gradually reduced. The outer slope 41 abuts against the outer circumferential surface 4c of the taper roller 4. The top portion 40 is located on the most inner side of the inner side surface 23a in the radial direction.

The inner holding portions 32 and 34 and the outer holding portions 31 and 33 are provided within a region surrounded by the rim portions 21 and 22 and the columnar portions 23 and 24 formed into straight plate-like shapes, that is, within the pocket 25.

When the taper roller bearing 1 provided with the split cage 5 in this manner is assembled, the taper roller 4 must get over the outer holding portions 31 and 33 of the columnar portions 23 and 24 so that the taper roller 4 can be put into the pocket 25 of the cage segment 6 from the radially outer side. When the taper roller 4 gets over the outer holding portions 31 and 33, the columnar portions 23 and 24 including the outer holding portions 31 and 33 are elastically deformed. That is, the work of putting the taper roller 4 into the pocket 25 can be attained by elastic deformation of the columnar portions 23 and 24 including the outer holding portions 31 and 33 pushed by the taper roller 4. Incidentally, the columnar portion 23 (24) is elastically deformed in a beam bending state in which the rim portions 21 and 22 located on the opposite sides of the columnar portion 23 (24) serve as fulcrums (fixed ends) and a load acts on a central region. Accordingly, stress in each of the corners 10 of the pocket 25 belonging to the fulcrums becomes larger than that in any other portion (axially central portion) of the columnar portion 23 (24).

Therefore, according to the embodiment, the outer holding portions 31 and 33 located on the side from which the taper roller 4 is inserted are provided only in the axially central regions of the columnar portions 23 and 24. The outer holding portions 31 and 33 are not provided in the axially opposite regions. As a result, during the work of insertion, each columnar portion 23, 24 is elastically deformed comparatively largely in its axially central region. However, the columnar portion 23, 24 can be prevented from being deformed largely in the axially opposite regions. Thus, local stress (stress concentration) occurring in each corner portion 10 of the pocket 25 can be relieved, so that the cage segment 6 can be prevented from being damaged with the corner portion as a start point.

Particularly in the embodiment, the outer holding portion 31 (33) is provided only in the central region including an axially central point of the columnar portion 23 (24). The outer holding portion 31 (33) is separated from each corner portion 10. In addition, axial length L (see Fig. 3) of the outer holding portion 31 (33) is preferably set to be not shorter than 35% of the axial length of the columnar portion 23 (24) and not longer than 70% of the same. Particularly as in the embodiment, the axial length L is more preferably set to be not shorter than 45% and not longer than 55%. Incidentally, the axial length L is an axial length excluding the side portion slope 39.

When the axial length L of the outer holding portion 31 (33) is made too short, the cage segment 6 may swing easily relatively to the taper roller 4 with the axially central portion (outer holding portion 31 (33)) of the cage segment 6 as a fulcrum, causing occurrence of vibration or abnormal noise. Therefore, the outer holding portion 31 (33) is formed not as a protrusion having a point contact with the outer circumferential surface 4c of the taper roller 4 or a state close to the point contact therewith, but a protrusion line having a predetermined axial length to secure a line contact state therewith.

Fig. 7 is a view in which a part (a connection portion between the rim portion 22 and the columnar portion 23) of the cage segment 6 is observed from the radially outer side. As described previously (see Fig. 3), the recess portions 28 are provided in the four corner portions 10 of the pocket 25, and each recess portion 28 has a concave curved outline shape. The shape of the recess portion 28 will be described in detail. As shown in Fig. 7, the recess portion 28 includes a first concave arc surface 29a, a second concave arc surface 29b, and a surface (flat surface) 29c. The first concave arc surface 29a is smoothly connected to the inner side surface 23a of the columnar portion 23. The second concave arc surface 29b is connected to the inner side surface 22a of the rim portion 22. The surface (flat surface) 29c connects the concave arc surfaces 29a and 29b. The surfaces 29a, 29b and 29c are connected smoothly, so that the recess portion 28 can have a concave curved outline shape. In addition, the bottom surface (aforementioned surface 29c) of the recess portion 28 is located on the axially outer side (left side in Fig. 7) of the inner side surface 22a of the rim portion 22. Incidentally, when the concave arc surface 29a and the concave arc surface 29b are connected to each other, the aforementioned surface 29c may be omitted.

In Fig. 7, the broken line shows a state where the taper roller 4 is in contact with both the inner side surface 23a and the inner side surface 22a. This state will be referred to as contact state. When observed from the radially outer side, a start point Q1 of the first concave arc surface 29a on the columnar portion 23 side is located between a start point Q2 of a small arc surface 4e formed for chamfering the corner portion 4d of the taper roller 4 in the contact state, and an intersection point Q3 in which a virtual surface formed by extending the inner side surface 22a intersects a virtual surface formed by extending the inner side surface 23a. Thus, the position of the start point Q1, that is, the position of the concave arc surface 29a can be made closer to the pocket center (right side in Fig. (A)). As a result, the cage segment 6 can be made as compact as possible with respect to the axial direction.

The radius of the recess portion 28 or particularly the radius R1 of the first concave arc surface 29a is set to be larger than the radius R0 of the small arc surface 4e of the corner portion 4d of the taper roller 4 (R1 >R0). Incidentally, the radius R2 of the second concave arc surface 29b may be also set to be larger than the radius R0. In addition, the recess portions 28 in the other corner portions 10 have similar configurations to that of the recess portion 28 between the columnar portion 23 and the rim portion 22 as shown in Fig. 7.

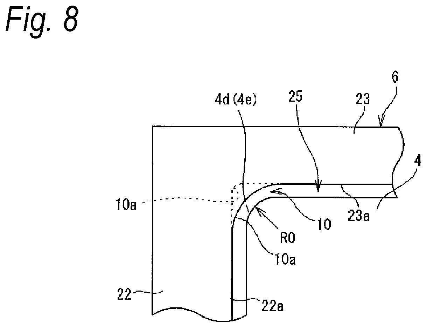

Incidentally, Fig. 8 is a view showing another form of the corner portion 10 of the pocket 25 (observed from the radially outer side). The recess portion 28 as shown in Fig. 7 is not provided in the corner portion 10, but only a concave curved surface 10a having an arc shape abutting against both the inner side surface 23a of the columnar portion 23 and the inner side surface 22a of the rim portion 22 is formed. In this case, when the concave curved surface 10a whose radius is larger than the radius R0 of the small arc surface 4e formed for chamfering the corner portion 4d of the taper roller 4 is formed, the corner portion 4d of the taper roller 4 abuts against the concave curved surface 10a before the taper roller 4 abuts against the inner side surfaces 23a and 22a. That is, in order that the taper roller 4 can be brought into contact with the inner side surfaces 23a and 22a so that the cage segment 6 can hold the taper roller 4 stably, the concave curved surface 10a must be formed to have a smaller radius than the radius R0 of the corner portion 4d as illustrated by the broken line in the case of the form shown in Fig. 8. However, when the radius of the concave curved surface 10 of the corner portion 10 is thus made small, extremely large stress (local stress) may be generated in the corner portion 10 by the columnar portion 23 elastically deformed by the taper roller 4 put into the pocket 25.

On the other hand, when the recess portion 28 is provided in the corner portion 10 as shown in Fig. 7, an arc surface portion whose radius is larger than the radius R0 of the small arc surface 4e of the corner portion 4d of the taper roller 4 can be provided in the corner portion 10 of the pocket 25. As a result, even when the columnar portion 23 is elastically deformed by the taper roller 4 put into the pocket 25, stress generated in the corner portion 10 can be reduced in comparison with the stress in the case of the form shown in Fig. 8.

Since the recess portion 28 has a concave curved surface (concave arc surfaces 29a and 29b) in this manner, it is possible to relieve the stress generated in the corner portion 10 when the taper roller 4 is put into the pocket 25. Particularly, a concave curved surface (concave arc surface 29a) having a large radius can be formed in the corner portion 10 of the pocket 25, so that the stress generated in the corner portion 10 can be relieved more.

In addition, due to the recess portion 28, the corner portion 10 of the pocket 25 can be prevented from interfering with the corner portion 4d of the taper roller 4. That is, the taper roller 4 can be brought into contact with both the inner side surfaces 23a and 22a, so that the cage segment 6 can hold the taper roller 4 stably. In addition, the cage segment 6 can be positioned by the taper roller 4.

In addition, in the cage segment 6 according to the embodiment, the outer holding portion 31 (33) is formed in the columnar portion 23 (24) as shown in Fig. 5. Accordingly, the sectional shape (thickness) of the columnar portion 23 (24) has a variation. Due to the variation in the sectional shape, local stress may occur easily in a part varying in sectional shape when the columnar portion 23 (24) is elastically deformed like a beam bending state as described previously. However, each of the axially opposite side portions of the outer holding portion 31 (33) has a slope 39 whose protrusion height is reduced gradually as it goes toward the rim portions 21 and 22. Accordingly, the sectional shape of the columnar portion 23, 24 can be prevented from varying suddenly. Thus, occurrence of local stress in the region where the outer holding portion 31, 33 is formed can be suppressed.

In addition, as described previously, the taper roller 4 must get over the outer holding portions 31 and 33 when the taper roller 4 is put into the pocket 25. In addition, on this occasion, the columnar portions 23 and 24 are elastically deformed. Therefore, according to the embodiment, as described previously, the outer holding portion 31 (33) includes a top portion 36, an inner slope 37 and an outer slope 38 as shown in Fig. 6. The protrusion height of the top portion 36 is the highest. The inner slope 37 and the outer slope 38 extend on the radially inner side and on the radially outer side from the top portion 36 respectively. The protrusion height of each slope 37, 38 is gradually reduced. According to this configuration, the taper roller 4 is guided by the outer slope 38 when the taper roller 4 is put into the pocket 25. After that, the taper roller 4 can get over the top portion 36. Thus, the taper roller 4 can be put into the pocket 25 easily.

In addition, the top portion 36 is made of an arc surface, so as to make it easy for the taper roller 4 to get over the top portion 36. In addition, when the taper roller 4 gets over the top portion 36, the both can be prevented from being damaged by each other.

From above, according to the split cage 5 of the embodiment, the work of putting the taper roller 4 into the pocket 25 of the cage segment 6 can be performed easily. Thus, the taper roller bearing 1 can be assembled easily.

The recess portions 27 and 46 will be described with reference to Fig. 3. As described previously, the contact surface portions 45 and the first recess portion 46 are provided in the inner side surface 23a (24a) of the columnar portion 23 (24). In addition, the second recess portion 27 is provided in the inner side surface 21 a, 22a of the rim portion 21, 22. Incidentally, the third recess portion 28 is provided in each corner portion 10 of the pocket 25.

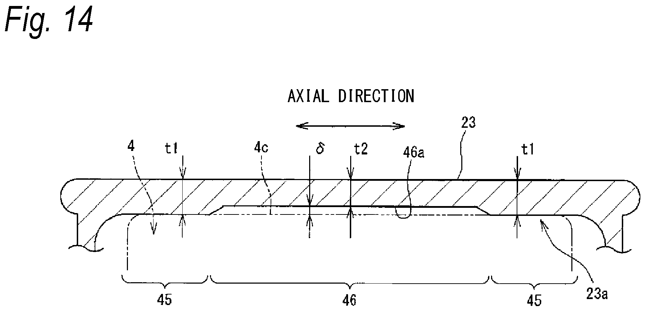

Fig. 14 is a sectional view taken from the arrow direction B-B in Fig. 3. In the inner side surface 23a of the columnar portion 23, the contact surface portions 45 are made of surfaces provided on the axially opposite sides of the inner side surface 23a respectively. The contact surface portions 45 are surfaces that can abut against the outer circumferential surface 4c of the taper roller 4. The axially opposite side portions of the outer circumferential surface 4c of the taper roller 4 are brought into line contact with the contact surface portions 45.

On the other hand, the recess portion 46 is made of a surface provided at the axial center of the inner side surface 23a. A surface 46a forming the recess portion 46 is a surface separated from the outer circumferential surface 4c of the taper roller 4 that is in contact with the contact surface portions 45. Thus, the recess portion 46 (surface 46a) cannot abut against the outer circumferential surface 4c of the taper roller 4. Even when the outer circumferential surface 4c of the taper roller 4 is in contact with the contact surface portions 45, a clearance 8 is formed between the outer circumferential surface 4c and the surface 46a forming the recess portion 46.

The recess portion 46 is a region sinking from the contact surface portions 45. Accordingly, of the columnar portion 23, thickness t1 in the contact surface portions 45 is larger than thickness t2 in the recess portion 46 (t1 >t2). That is, the columnar portion 23 is thick on its axially opposite sides and thin in its central portion.

In addition, as shown in Fig. 3, the outer holding portion 31 rises from the recess portion 46 of the inner side surface 23a of the columnar portion 23. In addition, the inner holding portion 32 rises from both the recess portion 46 and the contact surfaces 45 of the inner side surface 23a.

Incidentally, the contact surface portions 45 and the recess portion 46 are also provided in the other second columnar portion 24. The configuration of those portions is similar to that in the case of the first columnar portion 23.

In the taper roller bearing 1 provided with the cage segments 6 in this manner, lubricant (grease) is present between the pocket 25 of each cage segment 6 and each taper roller 4. When there is a large contact area between the pocket 25 and the taper roller 4, the rotational resistance (rotational torque) of the taper roller bearing 1 may be increased due to the viscous resistance of the lubricant.

Therefore, in the embodiment, the recess portion 46 is provided in the inner side surface 23a (24a) of the columnar portion 23 (24) opposed to the outer circumferential surface 4c of the taper roller 4 put into the pocket 25. Thus, of the outer circumferential surface 4c of the taper roller 4, only the axially opposite sides can abut against the inner side surface 23a (24a). As a result, in the pocket 25, the area of the region abutting against the outer circumferential surface 4c of the taper roller 4 can be reduced so that the rotational resistance of the taper roller bearing 1 can be reduced.

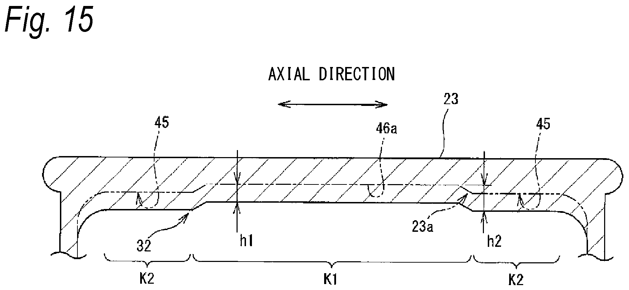

In addition, Fig. 15 is a sectional view taken from the arrow direction C-C in Fig. 3. In the embodiment, as shown in Fig. 15, height h1 of an axially central region K1 of the inner holding portion 32 is lower than height h2 of axially opposite side regions K2. That is, of the inner holding portion 32 (see Fig. 3), the region K1 intersecting the surface 46a forming the recess portion 46 is lower than the regions K2 intersecting the contact surface portions 45.

Accordingly, as described previously, the inner holding portion 32 can abut against the outer circumferential surface 4c of the taper roller 4 (see Fig. 4). The parts abutting against the outer circumferential surface 4c are the axially opposite regions K2 shown in Fig. 15. That is, the axially central region K1 does not abut against the taper roller 4, but a clearance is formed between the outer circumferential surface 4c of the taper roller 4 and the region K1 even when the taper roller 4 is in contact with the regions K2.

In this manner, the inner holding portion 32 can abut against the outer circumferential surface 4c of the taper roller 4. However, the inner holding portion 32 does not abut over its whole axial length but abuts only partially (in the axially opposite portions). As a result, in the pocket 25 (inner holding portion 32), the area of the region in contact with the outer circumferential surface 4c of the taper roller 4 can be reduced to contribute to reduction in rotational resistance of the taper roller bearing 1.

Particularly, as shown in Fig. 2, in a lower portion where a load (own weight) of the cage segments 6 concentrates, the inner holding portion 32 in a cage segment 6 located in the lower portion abuts against the taper roller 4. However, in the inner holding portion 32 of the cage segment 6, the area of the region in contact with the taper roller 4 can be reduced to contribute to reduction in rotational resistance.

Further, as described previously, in order to put a taper roller 4 into a pocket 25 of each cage segment 6 when the taper roller bearing 1 is assembled, it is necessary to elastically deform the columnar portions 23 and 24. In this case, deformation of end portions of the columnar portions 23 and 24 on the axially opposite sides is restricted by the rim portions 21 and 22. Thus, large stress (local stress) may occur in those end portions (corner portions 10 of the pocket 25) due to the elastic deformation. It is therefore necessary to secure strength on the axially opposite sides of each columnar portion 23, 24 in comparison with its axially central portion.

To this end, according to the embodiment, as described with reference to Fig. 14 (Fig. 15), the recess portion 46 is provided in the inner side surface 23a of the columnar portion 23 (24) not on the axially opposite sides where stress is comparatively large but at the axial center. At the axial center of the columnar portion 23 (24), the thickness t2 is reduced due to the recess portion 46. On the other hand, the thickness t1 on the axially opposite sides (contact surface portions 45) is increased. As a result, it is possible to secure strength on the axially opposite sides of the columnar portion 23 (24). Thus, the cage segment 6 can be prevented from being damaged due to the occurrence of stress (local stress) in the corner portions 10.

In addition, in the embodiment, as shown in Fig. 3, the second recess portion 27 is provided in the inner side surface 21 a of the rim portion 21. Incidentally, the position of the cage segment 6 in the axial direction can be restricted when the inner side surface 21 a (22a) of the rim portion 21 (22) abuts against the end surface 4a (4b) of the taper roller 4 (see Fig. 1). Accordingly, the inner side surface 21 a of the rim portion 21 has a configuration including the second contact surface portion 47 and the second recess portion 27. The second contact surface portion 47 can abut against the end surface 4a of the taper roller 4 (see Fig. 1). The second recess portion 27 cannot abut against the end surface 4a of the taper roller 4. The recess portion 27 is provided at the center of the inner side surface 21 a and formed by the lack of a part (central portion) of the second contact surface portion 47.

The contact surface portion 47 is provided to surround the recess portion 27 at the center from three sides. The contact surface portion 47 is not provided at one side. That is, the recess portion 27 is open in the axial direction, and open on the radially one side (radially outward in the embodiment). In this manner, the contact surface portion 47 protruding relatively to the second recess portion 27 (and the third recess portion 28) has a configuration including three continuous protrusion lines.

Incidentally, the second contact surface portion 47 and the second recess portion 27 are also provided in the other second rim portion 22. The configuration in the second rim portion 22 is similar to that in the case of the first rim portion 21.

When the recess portions 27 in non-contact with the end surfaces 4a and 4b of the taper roller 4 are provided in the rim portions 21 and 22 in this manner, the area of the region in contact with the end surfaces 4a and 4b of the taper roller 4 can be reduced in the pocket 25 of the cage segment 6 so as to contribute to reduction in rotational resistance of the taper roller bearing 1.

According to the taper roller bearing 1 including the split cage 5 having a plurality of cage segments 6, the area of the region in contact with the taper roller 4 can be reduced in the pocket 25 of each cage segment 6. Accordingly, the viscous resistance of lubricant (grease) between the pocket 25 and the taper roller 4 can be reduced so that the rotational resistance of the taper roller bearing 1 can be reduced.

In addition, according to the first recess portions 46 of the columnar portions 23 and 24 and the second recess portions 27 of the rim portions 21 and 22, a space for accumulating lubricant is formed between the recess portions 46 and 27 and the taper roller 4. Accordingly, when lubricant is, for example, short between the taper roller 4 and each of the inner ring 2 and the outer ring 3, lubricant accumulated in the recess portions 46 and 27 is supplied to a region in which lubricant is short. Thus, the lubricating performance of the taper roller bearing 1 can be improved.

The split cage 5 according to the invention is not limited to the illustrated form but may have another form within the scope of the invention. The embodiment has been described on the assumption that rollers are taper rollers. However, rollers may be cylindrical rollers. In addition, description has been made on the assumption that the cage 5 is a split cage. However, the cage 5 is not limited to the split cage but may be an integrated annular cage. In the case of the integrated annular cage, rim portions are made of annular members each having a ring-like shape.

In addition, the embodiment (see Fig. 3) has been described about the case where the inner holding portion 32 is formed all over the length of each columnar portion 23, 24. According to another configuration, however, the inner holding portion 32 may be provided only in an axial part (central region or opposite side portion regions) of the columnar portion.

In addition, the embodiment has been described about the case where the taper roller 4 is put into the pocket 25 from the radially outer side. However, the taper roller 4 may be put into the pocket 25 from the radially inner side. In this case, though not shown, it is preferable that the inner holding portion on the radially inner side from which a roller is inserted is provided only in the axially central region of the columnar portion, but there is no inner holding portion in the opposite side regions.

### Reference Signs List

- 1:: roller bearing
- 2:: inner ring
- 3:: outer ring
- 4:: taper roller
- 4c:: outer circumferential surface
- 4d:: corner portion
- 4e:: small arc
- 5:: split cage
- 6:: cage segment
- 10:: corner portion
- 21:: first rim portion
- 21a:: inner side surface
- 22:: second rim portion
- 22a:: inner side surface
- 23:: first columnar portion
- 23a:: inner side surface
- 23b:: outer side surface
- 24:: second columnar portion
- 24a:: inner side surface
- 24b:: outer side surface
- 25:: pocket
- 27:: second recess portion
- 28:: recess portion
- 29a:: concave arc surface
- 31:: outer holding portion
- 32:: inner holding portion
- 33:: outer holding portion
- 34:: inner holding portion
- 36:: top portion
- 37:: inner slope
- 38:: outer slope
- 39:: side portion slope
- 45:: contact surface portion
- 46:: recess portion
- 47:: second contact surface portion
- 51:: corner portion
- 52:: corner portion
- 53:: corner portion
- 54:: corner portion
- 55:: protrusion portion
- 55a:: part having an arc shape in section
- 56:: protrusion portion
- 56a:: part having an arc shape in section
- 57:: protrusion portion
- 57a:: part having an arc shape in section
- 58:: protrusion portion
- 58a:: part having an arc shape in section

## Claims

1. A split cage for a roller bearing, comprising:
a plurality of cage segments, each of the cage segments including a pair of rim portions and a pair of columnar portions, the pair of rim portions being separated from each other axially at a predetermined interval so as to be opposed to each other, the pair of columnar portions being provided between the pair of rim portions and forming a pocket together with the pair of rim portions so that a roller can be received in the pocket,
wherein
the roller is put into the pocket from one side of a radially outer side and a radially inner side of each of the cage segments while the plurality of cage segments are arrayed circumferentially in an annular space between an inner ring and an outer ring,
each of the columnar portions includes holding portions which protrude toward the roller on both the radially outer side and the radially inner side and abut against an outer circumferential surface of the roller to position the roller in a radial direction of the cage segments, and
the holding portions on the one side from which the roller is put into the pocket are provided in axially central regions of the columnar portions.

2. The split cage according to Claim 1, wherein a recess portion having a concave curved outline shape is formed in a corner portion of each of the pockets.

3. The split cage according to Claim 2, wherein the recess portion includes a concave arc surface having a radius larger than a radius of a small arc surface formed for chamfering a corner portion of each of the rollers.

4. The split cage according to any one of Claims 1 to 3, wherein each of axially opposite side portions in each of the holding portions on the one side has a side portion slope whose protrusion height is lower as it goes toward the rim portion side.

5. The split cage according to any one of Claims 1 to 4, wherein each of the holding portions on the one side includes a top portion, an inner slope and an outer slope, protrusion height of the top portion being highest, the inner slope and the outer slope extending on the radially inner and outer sides from the top portion respectively, protrusion height of each of the inner slope and the outer slope being reduced gradually.

6. A roller bearing comprising an inner ring, an outer ring, a plurality of rollers disposed rollably in an annular space between the inner ring and the outer ring, and a split cage according to any one of Claims 1 to 5.

7. A split cage for a roller bearing, comprising a plurality of cage segments receiving rollers and arrayed annularly and circumferentially, wherein:
each of the cage segments includes an outer side surface that is opposed to another cage segment circumferentially adjacent thereto, and
protrusion portions each including a part having an arc shape in section are provided in corner portions extending radially in the outer side surface and/or corner portions extending axially in the outer side surface.

8. The split cage for a roller bearing according to Claim 7, wherein the part having an arc shape in section in each of the protrusion portions is provided in a region close to another cage segment that is located circumferentially adjacently thereto so that the another cage segment can abut against the part.

9. A roller bearing comprising an inner ring, an outer ring, a plurality of rollers disposed rollably in an annular space between the inner ring and the outer ring, and a split cage according to Claim 7 or 8.

10. A cage comprising a pair of rim portions separated from each other axially at a predetermined interval so as to be opposed to each other, and columnar portions separated from one another circumferentially at predetermined intervals between the pair of rim portions, so that pockets that can receive rollers of a roller bearing are formed among the pair of rim portions and circumferentially adjacent ones of the columnar portions, wherein
an inner side surface of each of the columnar portions includes contact surface portions and a recess portion, the contact surface portions being provided on axially opposite sides of the inner side surface so that the contact surface portions can abut against an outer circumferential surface of one of the rollers, the recess portion being provided at an axial center of the inner side surface so that the recess surface cannot abut against the outer circumferential surface of the roller.

11. The cage for a roller bearing according to Claim 10, further comprising:
a plurality of cage segments each including a pair of the columnar portions provided between the pair of rim portions, the pockets receiving the rollers being formed by the pairs of the columnar portions together with the pair of rim portions, wherein
the plurality of cage segments are arrayed circumferentially in an annular space formed between an outer ring and an inner ring of the roller bearing.

12. The cage for a roller bearing according to Claim 10 or 11, wherein an inner side surface of each of the rim portions includes a second contact surface portion that can abut against an end surface of a corresponding one of the rollers, and a second recess portion that cannot abut against the end surface of the roller.

13. A roller bearing comprising an inner ring, an outer ring, a plurality of rollers disposed in an annular space between the inner ring and the outer ring so as to rotate, and a cage according to any one of Claims 10 to 12.
